# EUROPEAN PATENT APPLICATION

(11) **EP 4 545 897 A1**
(43) Date of publication of application: **30.04.2025**
(21) Application number: 23830372.1
(22) Date of filing: 28.06.2023
(51) Int. Cl.: F28F 3/00

(54) **DIRECT COOLING PLATE, HEAT EXCHANGER, POWER BATTERY PACK AND VEHICLE**

(30) Priority: 30.06.2022 CN 202221703985 U
(71) Applicant: BYD Company Limited, Shenzhen, Guangdong 518118 (CN)
(72) Inventor: CAI, Yaomin, Shenzhen, Guangdong 518118 (CN); ZHAI, Jian, Shenzhen, Guangdong 518118 (CN); ZHONG, Rijun, Shenzhen, Guangdong 518118 (CN); ZHU, Ruiyuan, Shenzhen, Guangdong 518118 (CN); CHEN, Lu, Shenzhen, Guangdong 518118 (CN)
(74) Representative: Taor, Simon Edward William
(86) International application number: PCT/CN2023/103482
(87) International publication number: WO 2024/002201

(57) **Abstract**

A direct cooling plate, a heat exchanger, a power battery pack and a vehicle. The direct cooling plate includes a plurality of heat exchange channels, which are arranged inside the direct cooling plate. Each heat exchange channel includes an inlet for a refrigerant to enter therein and an outlet for the refrigerant to flow out therefrom, wherein the at least one heat exchange channel is circumferentially arranged around the other heat exchange channels; and each heat exchange channel forms a heat exchange unit at the direct cooling plate, and the heat exchange unit is used for performing heat exchange in different temperature regions of a battery. The direct cooling plate can control the temperature of the refrigerant at the inlet of each heat exchange channel aimed at different temperature regions of the battery, such that the overall temperature difference of the battery is improved, and thereby prolonging the service life of the battery.

## Description

### CROSS-REFERENCE TO RELATED APPLICATIONS

The present disclosure claims priority to Chinese Patent Application No. 202221703985.0 titled "DIRECT COOLING PLATE OF HEAT EXCHANGER, HEAT EXCHANGER AND POWER BATTERY PACK", filed on June 30, 2022, which is incorporated herein by reference in its entirety.

### FIELD

The present disclosure relates to the field of power battery heat exchange, and in particular, to a direct cooling plate, a heat exchanger, a power battery pack, and a vehicle.

### BACKGROUND

In related arts, traditional power battery pack stamping and brazing coolers exchange heat with the power battery through the characteristic of refrigerant evaporation and heat absorption, thereby achieving the purpose of cooling the power battery. The flow channel of the cooler adopts a structural design of one inlet and one outlet. When regulating the flow rate of the cooler, it will affect the heat transfer efficiency of the entire contact area between the cooler and the battery. At present, power batteries have high energy density and large volume, and the heat generation in different areas of the battery cell is also different. Therefore, traditional power battery coolers can no longer meet the needs of using power batteries, which is not conducive to temperature difference management of power batteries and affects the service life of power batteries.

### SUMMARY

The purpose of this disclosure is to provide a direct cooling plate, a heat exchanger, a power battery pack, and a vehicle. The direct cooling plate can meet the cooling and/or heating needs of different areas of the battery by controlling the temperature of each heat exchange channel, causing each heat exchange channel to have different cooling and/or heating capabilities, improving the overall temperature difference of the battery and increasing its service life.

In order to achieve the above objectives, the first aspect of the present disclosure provides a direct cooling plate including a plurality of heat exchange channels, which are arranged inside the direct cooling plate. Each heat exchange channel includes an inlet for a refrigerant to enter therein and an outlet for the refrigerant to flow out therefrom, wherein the at least one heat exchange channel is circumferentially arranged around the other heat exchange channels.

Each heat exchange channel forms a heat exchange unit at the direct cooling plate, and the heat exchange unit is configured to performing heat exchange in different temperature regions of a battery.

In an embodiment, the inlet and outlet of the heat exchange channel are located on the same side of the direct cooling plate.

In an embodiment, the number of heat exchange channels is two, which are channel one and channel two, and channel one is arranged around the outer side of channel two.

In an embodiment, channel two is generally concave in shape, and channel one includes two first cooling portions and a second cooling portion connected between the two first cooling portions. The second cooling portion extends into the concave portion formed by channel two, and the two first cooling portions are circumferentially arranged around the outer side of channel two.

In an embodiment, the channel one includes a first diversion channel, a first diversion channel, a first cooling channel, and a first confluence channel are in communication with each other in sequence, the first cooling channel, and the first confluence channel includes at least two sub channels. The number of sub channels of the first cooling channel is greater than the number of sub channels of the first diversion channel and the first confluence channel;
And/or, the second flow channel includes a second diversion channel, a second cooling channel, and a second confluence channel are in communication with each other in sequence, and each of the second diversion channel, and the second confluence channel all include at least two sub channels, and the number of sub channels of the second cooling channel is greater than the number of sub channels of the second diversion channel and the second confluence channel.

In an embodiment, the number of sub channels of the first diversion channel and the first confluence channel is the same;
The number of sub channels of the second diversion channel and the second confluence channel is the same.

In an embodiment, the direct cooling plate includes interconnected plate one and plate two, wherein plate one is provided with groove one and groove two that are recessed in a direction away from plate two, and groove one is arranged around the outer side of groove two. Plate two and groove one enclose channel one, while plate two and groove two enclose channel two.

In an embodiment, groove one and groove two are formed by stamping;
And/or, the first and second plates are connected by brazing.

In the second aspect of the present disclosure, a heat exchanger is provided, which includes the aforementioned direct cooling plate.

In the third aspect of the present disclosure, a power battery pack is provided, which includes a power battery, wherein the power battery pack further includes a heat exchanger as described above, the heat exchanger is attached to the power battery for cooling and/or heating the power battery.

The fourth aspect of the present disclosure also provides a vehicle including the power battery pack described in the third aspect of the present disclosure.

Through the above technical solution, namely the disclosed direct cooling plate, the direct cooling plate includes multiple heat exchange channels, and each heat exchange channel includes an inlet and an outlet. Each heat exchange channel forms a heat exchange unit, which corresponds to different temperature zones on the battery (such as a power battery). According to the cooling and/or heating needs of different temperature zones of the battery, the temperature inside the heat exchange channel can be adjusted by controlling the flow rate and pressure of the coolant at the inlet of each heat exchange channel, so that the cooling and/or heating capacity of each heat exchange unit is adapted to the temperature of the corresponding battery zone, improving the overall temperature difference of the battery, achieving more accurate temperature difference management of the battery, and prolonging the service life of the battery.

Other features and advantages of this disclosure will be described in detail in the subsequent specific implementation section.

### BRIEF DESCRIPTION OF THE DRAWINGS

The accompanying drawings are used to provide further understanding of the present disclosure and form a part of the specification. They are used together with the specific embodiments below to explain the present disclosure, but do not constitute limitations on the present disclosure. In the attached figure:
FIG. 1 is a schematic diagram of the structure of a stamping and brazing cooler for power battery packs in related technologies.
FIG. 2 is a schematic diagram of channel one and channel two of the direct cooling plate provided in some embodiments of the present disclosure.
FIG. 3 is a schematic diagram of channel one of the direct cooling plate provided in some embodiments of the present disclosure.
FIG. 4 is a schematic diagram of channel two of the direct cooling plate provided in some embodiments of the present disclosure.
FIG. 5 is a front view of plate one of the direct cooling plate provided in some embodiments of the present disclosure.
FIG. 6 is a front view of plate two of the direct cooling plate provided in some embodiments of the present disclosure.
FIG. 7 is a structural disassembly diagram of the power battery pack provided by some embodiments of the present disclosure.
FIG. 8 is a front view of a power battery provided by some embodiments of the present disclosure, wherein the two end positions of the power battery and the middle position of the battery cell are shown.
FIG. 9 is a structural block diagram of a vehicle provided by some embodiments of the present disclosure.

### DETAILED DESCRIPTION

The specific implementation methods of this disclosure will be described in detail below in conjunction with the accompanying drawings. It should be understood that the specific embodiments described herein are only for illustration and explanation of this disclosure, and are not intended to limit this disclosure.

In this disclosure, unless otherwise stated, directional words such as "up, down, left, right" usually refer to the corresponding up, down, left, and right in the accompanying drawings; Internal and external "refer to the" internal and external "relative to the contour of the corresponding component itself. In addition, the terms "first", "second", "third", "fourth", etc. used in this disclosure are intended to distinguish one element from another and do not have sequence or importance. In addition, in the following description, when referring to figures, unless otherwise explained, the same reference numerals in different figures represent the same or similar elements. The above definition is only for the purpose of explaining and illustrating this disclosure and should not be construed as a limitation on this disclosure.

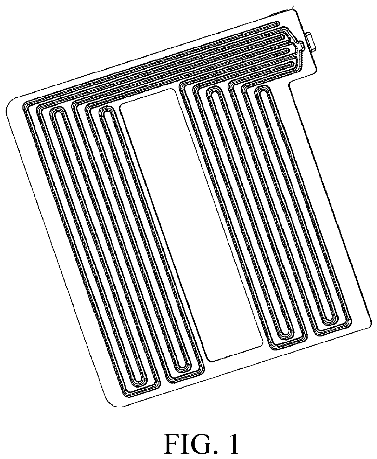

In related technology, the power battery pack stamping and brazing cooler is shown in FIG. 1, which is composed of a stamping plate with internal flow channels, a temperature equalizing plate, and welded joints. The refrigerant enters the flow channel through the inlet of the joint and flows in parallel through the parallel arranged flow channels by means of diversion. The refrigerant circulates in the flow channel and eventually converges and flows out of the outlet of the joint, completing the circulation of the refrigerant in the flow channel. This type of cooler exchanges heat with the power battery through the characteristic of refrigerant evaporation and heat absorption, thereby achieving the purpose of cooling the power battery.

The stamping and brazing cooler of this power battery pack has the following disadvantages: all flow channels are affected by the inlet refrigerant flow rate of the joint, and when adjusting the inlet flow rate of the cooler, it will affect the heat transfer efficiency of the entire contact area between the cooler and the battery. The cooler channel adopts an integrated design, which increases the pressure drop of the entire cooler, resulting in different evaporation temperatures of the refrigerant at different pressures, ultimately leading to an increasing temperature gradient inside the cooler along the positive path. The long length of the flow channel leads to poor diversion effect of parallel arranged branches, as well as different heat transfer areas of the flow channels. As a result, the evaporation degree of the refrigerant in different branches varies, ultimately causing the refrigerant in some branches to evaporate prematurely, resulting in local overheating of the parallel flow channels.

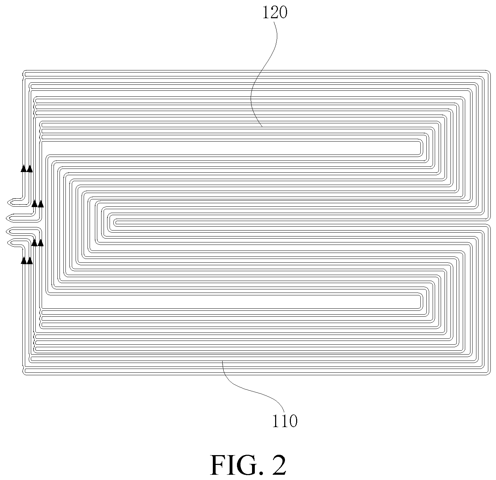

As shown in FIG. 2 to FIG. 8, in order to achieve the above objectives, the first aspect of the present disclosure provides a direct cooling plate 10, which includes a plurality of heat exchange channels 100, which are arranged inside the direct cooling plate. Each heat exchange channel 100 includes an inlet 101 for a refrigerant to enter therein and an outlet 102 for the refrigerant to flow out therefrom, wherein the at least one heat exchange channel 100 is circumferentially arranged around the other heat exchange channels 100; Each heat exchange channel 100 forms a heat exchange unit at the direct cooling plate 10, and the heat exchange unit is used for performing heat exchange in different temperature regions of a battery (such as a power battery 300).

Through the above technical solution, namely the disclosed direct cooling plate 10, the direct cooling plate 10 includes multiple heat exchange channels 100, and each heat exchange channel 100 includes an inlet 101 and an outlet 102. Each heat exchange channel 100 forms a heat exchange unit, which corresponds to different temperature regions on the battery (such as the power battery 300). According to the cooling and/or heating needs of different temperature regions of the battery, the temperature inside the heat exchange channel 100 can be adjusted by controlling the flow rate and pressure of the refrigerant at the inlet 101 of each heat exchange channel 100, so that the cooling and/or heating capacity of each heat exchange unit is adapted to the different temperature regions of the corresponding battery, improving the overall temperature difference of the battery and making it more accurate to be managed, prolonging the service life of the battery. At the same time, at least one heat exchange channel 100 is enclosed in the circumferential direction of other heat exchange channels 100, which can preferentially heat or cool the outer circumferential direction of the battery, which is beneficial for improving the temperature difference of the battery in different environments and to a certain extent, prolonging the service life of the battery.

It is worth noting that refrigerant is introduced into the direct cooling plate 10, which can be used for cooling; or gas refrigerant is introduced, which can be used for heating.

It can be understood that the structural form of the direct cooling plate 10 realizes the introduction of different refrigerants (gas or liquid refrigerants) into different temperature regions of the battery according to the required cooling and/or heating quantity of heat, which can better and more accurately control the overall temperature difference of the battery; Meanwhile, due to the separation of different heat exchange units on the direct cooling plate 10, its response speed will also be accelerated; Furthermore, compared with traditional structures, dividing a whole flow channel into multiple separately controlled flow channels greatly reduces the frictional pressure drop of the direct cooling plate 10.

It should be noted that the above-mentioned battery can be a power battery 300, or other batteries with different heating temperatures in different areas during charging, discharging, or use. The specific structure of the direct cooling plate 10 is explained below using the power battery 300 as an example, but it should not be understood as limiting the scope of protection of this disclosure.

The positions of the inlet 101 and outlet 102 of multiple heat exchange channels 100 can be constructed in any suitable way. Considering the convenience of connecting with cooling systems (such as air conditioning systems), in some embodiments, the inlet 101 and outlet 102 of the heat exchange channels are located on the same side of the direct cooling plate 10. For each heat exchange channel 100, the inlet 101 and outlet 102 of the heat exchange channel 100 are located on the same side of the direct cooling plate 10. For multiple heat exchange channels 100, the inlet 101 and outlet 102 of multiple heat exchange channels 100 are also located on the same side of the direct cooling plate 10, making it convenient to connect with the external air conditioning system through a joint 200, simplifying the overall structure, saving components and space occupation.

Multiple heat exchange channels 100 can be arranged according to actual needs, and the arrangement method is not limited. Specific arrangements can be made according to the heating area of the battery.

The power battery 300 has high energy density and large volume, and different parts of the battery cell often generate different amounts of heat. Among them, the heat generated by the electrodes at both ends of the battery cell is greater than that in the middle of the battery cell. However, traditional coolers use a single inlet and outlet, with uniform cooling or heating of the cold plate temperature. Even if the highest temperature of the battery cell can be reduced, it does not significantly improve the overall temperature difference of the battery cell, greatly affecting the lifespan of the power battery 300.

Meanwhile, due to uneven heating of the battery, the heat exchange demand varies in different places. The current technology is actually designed based on the maximum heat transfer capacity of all parts, which leads to significant energy waste and also affects the power distribution of the compressor at the vehicle end. In fact, due to the urgent demand for fast charging and the slow development of high-power compressors, the thermal management of batteries under high rate charging has become an urgent problem to be solved in the industry.

Considering the above situation, in order to improve the temperature difference of the power battery 300, as shown in FIG. 2, FIG. 7, and FIG. 8, in some embodiments of the present disclosure, there are two heat exchange channels 100, namely channel one 110 and channel two 120, and channel one 110 is enclosed on the outside of channel two 120. Among them, channel one 110 corresponds to the positive and negative poles of position A at both ends of power battery 300, which is the area with high heat generation. Channel two 120 corresponds to the middle position B of the battery cell of power battery 300, which is the area with relatively low heat generation. The cooling capacity of channel one 110 and channel two 120 can be controlled to be different, that is, the cooling capacity of channel one 110 is greater than that of channel two 120. Channel one 110 with stronger cooling capacity is used to cool the two end positions A of the power battery 300 with higher heat generation, while channel two 120 with relatively weaker cooling capacity is used to cool the middle position B of the power battery 300 with lower heat generation, thereby solving the problem of uneven heat generation of the battery cells, reducing the temperature difference of the battery cells, and improving the service life of the battery pack. At the same time, set the heat exchange channel 100 to two, forming two heat exchange units that can be individually controlled and regulated in temperature; Compared to the traditional arrangement of a heat exchange channel, it can reduce the pressure difference along the way to a certain extent, thereby avoiding uneven flow distribution along the way and improving the local overheating of the cooling plate.

It should be noted that in extremely cold regions with low outdoor temperatures, in order to ensure the performance of the power battery 300, it is necessary to heat the power battery 300. At this time, the air conditioning system can be in heating mode, where channel one 110 corresponds to the positive and negative poles of position A at both ends of the power battery 300, where the heat generation is relatively large, and channel two 120 corresponds to the middle position B of the battery cell of the power battery 300, where the heat generation is relatively small. The heating capacity of channel one 110 and channel two 120 can be controlled to be different, that is, the heating capacity of channel one 110 is smaller than that of channel two 120. Using channel one 110 with weaker heating capacity to heat the two end positions A of the power battery 300 with higher heat generation, and using channel two 120 with relatively stronger heating capacity to heat the middle position B of the power battery 300 with lower heat generation, different heating requirements can be used to improve the temperature uniformity of the battery cells, reduce temperature differences, and also improve the life of the battery pack.

In addition, cooling can also be achieved through channel one 110 and heating can be achieved through channel two 120. That is, in the multiple heat exchange channels 100 in the disclosed direct cooling plate 10, some are used for cooling and some are used for heating, in order to meet the simultaneous cooling and heating needs of the battery.

In addition, the refrigerant flow rate can be prioritized to channel one 110. Firstly, the areas with higher temperatures can be cooled or heated. After a certain period of time, the refrigerant flow rate can be allocated to channel two 120 as needed to achieve cooling or heating of the areas with lower and higher temperatures together, improving the temperature difference.

It should be noted that the cooling or heating of channel one 110 and channel two 120 can be achieved by introducing different refrigerants separately to control the cooling or heating capacity of the two channels; It can also be connected separately to the same refrigeration system, for example, in the refrigeration system of vehicle air conditioning, an electronic expansion valve can be installed upstream of flow channel one 110 and channel two 120 to control the flow rate and evaporation pressure of refrigerant entering the two flow channels, achieve the distribution of compressor power, and also achieve different cooling or heating capabilities of the two flow channels. The conventional technology for air conditioning refrigeration systems will not be elaborated here.

It can achieve precise control of partitioning, without the need to design according to the maximum heat exchange capacity of all parts, which leads to significant energy waste and affects the power distribution of the compressor at the vehicle end. It is more energy-efficient and provides more compressor power to the entire vehicle.

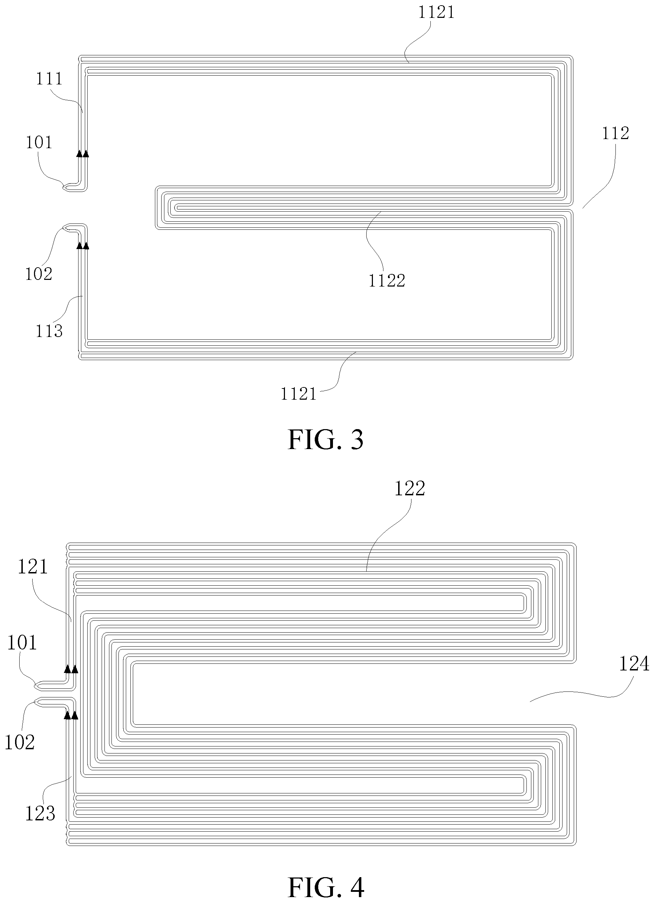

The specific arrangement of channel one 110 and channel two 120 can adopt any suitable structure, as shown in FIG. 2, FIG. 3, FIG. 4, and FIG. 5. In some embodiments disclosed herein, channel two 120 is generally concave in shape. Channel one 110 includes two first cooling portions 1121 and a second cooling portion 1122 connected between the two first cooling portions 1121. The second cooling portion 1122 extends into the concave portion 124 formed by channel two 120, and the two first cooling portions 1121 are surrounded by the outer circumference of channel two 120. As shown in FIG. 4, channel two 120 is generally in a concave shape, which means that channel two 120 mainly includes two parts, upper and lower, and a concave portion 124 with a right opening is formed between these two parts. Correspondingly, as shown in FIG. 3, the two first cooling portions 1121 of channel one 110 are located on the outside of channel two 120, and the second cooling portion 1122 used to connect the two first cooling portions 1121 extends into the concave portion 124 of channel two 120. The two first cooling portions 1121 of channel one 110 correspond to the positive and negative poles of the two end positions A of the power battery 300, and the second cooling portion 1122 corresponds to the middle position of the battery cell. This is mainly because the two end regions of the power battery 300 generate a large amount of heat, while the middle of the battery cell generates a large amount of heat. Due to the difficulty of heat dissipation and the possibility of high temperature in position B, the second cooling portion 1122 is set to correspond to it, Realize rapid cooling by enhancing cooling capacity; At the same time, the upper and lower parts of channel two 120 correspond to the two ends and middle position of the battery, and can be cooled in a relatively weak form to control the temperature difference of power battery 300, improve the service life of the battery, and ensure the normal use of the vehicle.

It should be noted that the inlet 101 and outlet 102 of channel one 110 and channel two 120 are both located on the left side, that is, both inlet 101 and outlet 102 are located on the left side, which can be connected through a joint 200 to simplify the connection structure.

In other embodiments, channel one 110 can be roughly in the shape of a square, and channel two 120 can be any other channel formed inside the square shaped channel one 110. Channel one 110 is set to have a strong cooling capacity for cooling the positive and negative electrodes at positions A on both ends of the battery, while channel two 120 is set to have a weaker cooling capacity for cooling the middle position B of the battery cell.

It should be noted that when heating is required, the refrigerant in channel one 110 and channel two 120 can be switched to heat the middle position B of the battery cell corresponding to channel two 120 with stronger heating ability. Channel one 110 is set to have weaker heating ability and is used to heat the positive and negative electrodes at positions A on both ends of the battery.

It is worth noting that the specific structures of channel one 110 and channel two 120 can be designed according to changes in thermal load, and are not limited to the above arrangement forms.

As shown in FIG. 3, in some embodiments, channel one 110 includes a first diversion channel 111, a first cooling channel 112, and a first confluence channel 113 that are sequentially connected, and each of the first diversion channel 111, the first cooling channel 112, and the first confluence channel 113 includes at least two sub channels. The number of sub channels in the first cooling channel 112 is greater than the number of sub channels in the first diversion channel 111 and the first confluence channel 113. Among them, the first cooling channel 112 forms the two first cooling portions 1121 and the second cooling portion 1122 mentioned above; The first diversion channel 111 and the first confluence channel 113 form an inlet 101 and an outlet 102 at one end respectively away from the first cooling channel 112. The number of sub channels in the first cooling channel 112 is greater than that in the first diversion channel 111 and the first confluence channel 113, which can increase the cooling area to meet the needs of the area to be cooled.

As shown in FIG. 4, at the same time, channel two 120 includes a second diversion channel 121, a second cooling channel 122, and a second confluence channel 123 that are sequentially connected, and each of the second diversion channel 121, the second cooling channel 122, and the second confluence channel 123 includes at least two sub channels. The number of sub channels in the second cooling channel 122 is greater than the number of sub channels in the second diversion channel 121 and the second confluence channel 123. Among them, the second cooling channel 122, together with the second diversion channel 121 and the second confluence channel 123, forms the above-mentioned concave shape, and the second cooling channel 122 is concave in the right to left direction to form a concave portion 124 for accommodating the second cooling portion 1122. The second diversion channel 121 and the second confluence channel 123 form an inlet 101 and an outlet 102 at one end respectively away from the second cooling channel 122. The number of sub channels in the second cooling channel 122 is greater than that in the second diversion channel 121 and the second confluence channel 123, which can also increase the cooling area to meet the needs of the area to be cooled.

In some embodiments, the first diversion channel 111, the first confluence channel 113, the second diversion channel 121, and the second confluence channel 123 may all include two sub channels, while the first cooling channel 112 may include four sub channels, with each two sub channels of the first cooling channel 112 connecting a sub channel of the first diversion channel 111 and the first confluence channel 113; The second cooling channel 122 may include eight sub channels, and every four sub channels of the second cooling channel 122 are connected to a sub channel of the second diversion channel 121 and the second confluence channel 123, further improving the cooling uniformity of a certain temperature zone while meeting the diversion requirements.

In order to further reduce the pressure drop, minimize the temperature difference caused by pressure changes in the direct cooling plate 10, and reduce energy consumption losses, in some embodiments, the number of sub channels of the first diversion channel 111 and the first confluence channel 113 is the same; The number of sub channels of the second diversion channel 121 and the second confluence channel 123 is the same. In channel one 110, the refrigerant entering the first diversion channel 111 from inlet 101 is allowed to pass through the first cooling channel 112 and then discharged through the first convergence channel 113 with the same number of sub channels to avoid pressure drop in channel one 110; Similarly, in channel two 120, the refrigerant entering the second diversion channel 121 from the inlet 101 passes through the second cooling channel 122 and is then discharged through the second confluence channel 123 with the same number of sub channels, which can also avoid pressure drop in channel two 120.

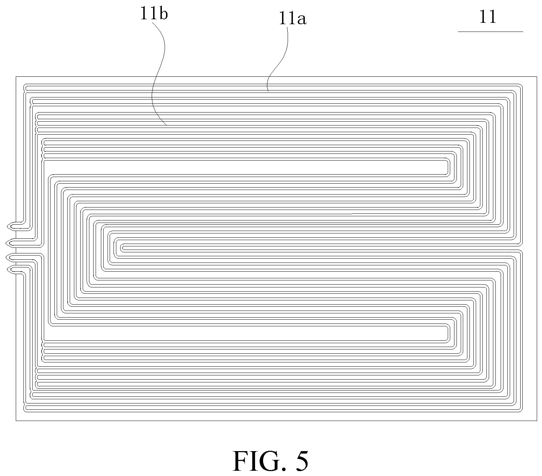

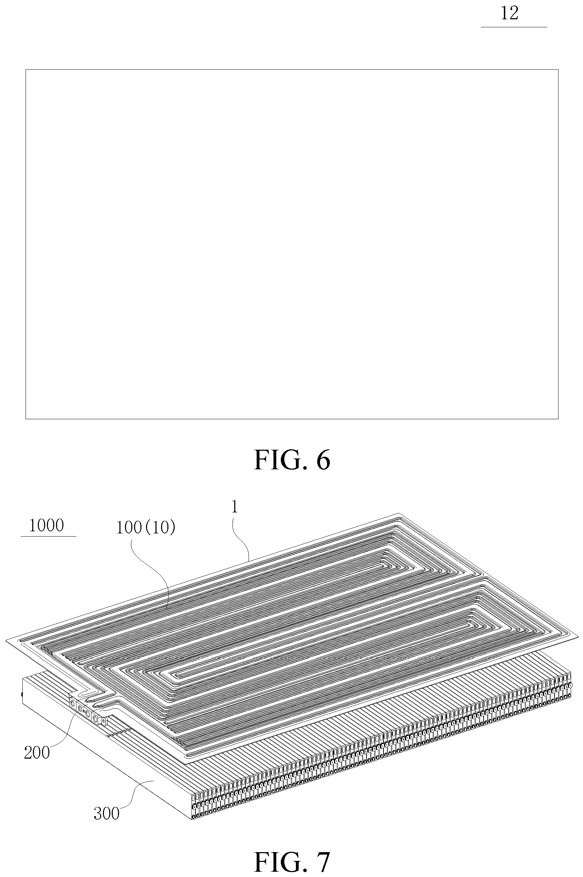

The direct cooling plate 10 can be constructed in any suitable manner, as shown in FIG. 5 and FIG. 6. In some embodiments, the direct cooling plate 10 includes interconnected plate one 11 and plate two 12. Plate one 11 is provided with grooves one 11a and groove two 11b that are recessed in a direction away from plate two 12, and groove one 11a is enclosed on the outer side of groove two 11b. Plate two 12 and groove one 11a enclose channel one 110, while plate two 12 and groove two 11b enclose channel two 120. It should be noted that grooves one 11a and groove two 11b with the same shape can also be formed simultaneously on board 111 and board 212. Among them, groove one 11a and groove two 11b are partial structures of channel one 110 and channel two 120, respectively. When board 111 and board 212 are connected, groove one 11a on board 111 and groove one 11a on board 212 jointly enclose channel one 110, and groove two 11b on board 111 and groove two 11b on board 212 jointly enclose channel two 120. Among them, the shape of groove one 11a on plate 111 and plate 212 can be half the structure of channel one 110, that is, the two grooves one 11a are mirrored. For example, when channel one 110 is circular, both grooves one 11a are semi-circular; the structure of groove two 11b on plate one 11 and plate two 12 can refer to groove one 11a, which will not be repeated here.

Groove one 11a and groove two 11b can be constructed in any suitable manner, as shown in FIG. 5. In some embodiments disclosed herein, grooves one 11a and groove two 11b are formed by stamping; Plate one 11 and plate two 12 can both be metal plates, and the groove one 11a and groove two 11b mentioned above are formed using stamping technology. It should be noted that grooves one 11a and groove two 11b can also be formed by integral casting or by mechanical processing.

Plate one 11 and plate two 12 can be connected in any suitable way. In some embodiments, plate one 11 and Plate two 12 are connected by brazing, and the specific brazing process can be referred to in relevant technologies, which will not be repeated here.

This disclosure provides a direct cooling plate 10, which includes two independent heat exchange channels 100 to meet the heat exchange needs of different areas of the battery. Unlike traditional coolers, this direct cooling plate 10 emphasizes matching the cooling or heating needs of different areas of the battery, providing more cooling capacity to the areas with higher heat generation at both ends of the battery cell to improve the temperature difference of the battery. Has the following characteristics:
Two heat exchange channels 100 are adopted, and each heat exchange channel 100 includes an inlet 101 and an outlet 102 in a structural form. Each inlet 101 controls the flow rate in the heat exchange channel 100 corresponding to different regions separately, and the cooling distribution between different regions is achieved by adjusting the flow rate strategy of different inlet 101. At the same time, the arrangement of two heat exchange channels 100 is adopted to reduce the internal pressure drop, balance the evaporation temperature of the refrigerant in the channels, and reduce the temperature difference along the channels.

Two heat exchange channels 100 are independently designed with temperature control zones. Channel one 110 is arranged in the area with high heat generation of the battery cell, while channel two 120 is arranged in the area with low heat generation of the battery cell. This achieves different heat exchange rates of the refrigerant in different channels, thereby reducing the temperature difference of the battery.

The direct cooling plate 10 adopts an integrated stamping and brazing design, integrating independent flow channels for high space utilization.

Compared to related technologies, this disclosure distinguishes the thermal load differences in different regions in terms of thermal management effectiveness, which is beneficial for managing the temperature difference of the battery and solving the problem of uneven heating inside the battery. In terms of design, it has more flexible adjustment methods, and the use of a direct cooling plate 10 that includes at least two heat exchange channels has a faster response speed, which can better and more accurately control the temperature difference of the battery. The direct cooling plate 10 has excellent geometric flexibility and does not require secondary design for thermal management of a small part. The direct cooling plate 10 can reduce frictional resistance along the way and has excellent energy-saving properties.

**In the** second aspect of this disclosure, a heat exchanger 1 is also provided, which includes the above-mentioned direct cooling plate 10. Therefore, the heat exchanger 1 also has all the advantages of the above-mentioned direct cooling plate 10, which will not be repeated here.

Among them, when the inlet 101 and outlet 102 of multiple heat exchange channels are located on the same side of the direct cooling plate 10, the heat exchanger 1 also includes a joint 200. The joint 200 is equipped with multiple connecting channels that correspond one-to-one with the inlet 101 and outlet 102 of each heat exchange channel 100 and are connected, which can simplify the connection structure between the heat exchanger and the air conditioning system, improve the connection efficiency, and save space occupation.

The third aspect of this disclosure also provides a power battery pack 1000, comprising a power battery 300. The power battery pack 1000 further comprises the aforementioned heat exchanger 1, which is attached to the power battery 300 for cooling and/or heating the power battery 300. It should be noted that the adhesion of heat exchanger 1 to power battery 300 can be understood as the direct adhesion of heat exchanger 1 to power battery 300, or as the setting of thermal conductive adhesive between the two. Heat exchanger 1 is set to power battery 300 through thermal conductive adhesive.

Among them, the power battery 300 can be a blade battery, which is a long and thin battery stacked in one direction. Especially when equipped with high-power charging, the positions A at both ends of the battery will generate a large amount of heat, causing the temperature on both sides of the entire battery to be too high. Heat exchanger 1 receives refrigerant from the air conditioning refrigeration system. At this point, channel one 110 corresponding to both ends start to supply refrigerant at maximum power, causing the temperature at both ends of the battery to decrease and reducing heat accumulation at both ends; Wait until the temperature at position B in the middle of the battery cell slowly rises, then start to allocate a portion of the compressor power to the middle area, slowly introduce refrigerant, and adjust the amount of refrigerant introduced according to the temperature changes in the middle area.

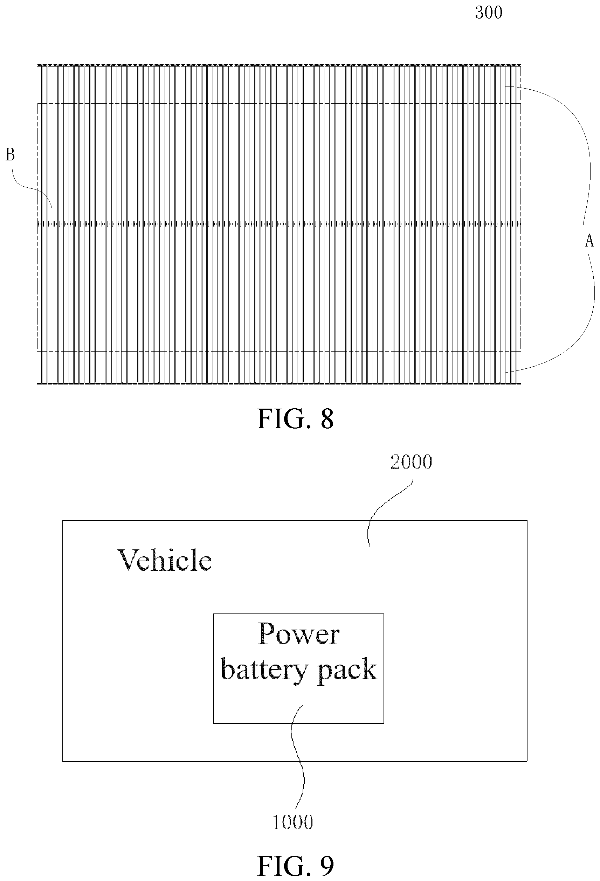

As shown in FIG. 9, the fourth aspect of the present disclosure also provides a vehicle 2000, which includes the power battery pack 1000 described in the third aspect of the present disclosure. Therefore, the vehicle 2000 also has all the advantages of the power battery pack 1000 mentioned above, which will not be repeated here.

The preferred embodiments of the present disclosure have been described in detail above in conjunction with the accompanying drawings. However, the present disclosure is not limited to the specific details of the embodiments described above. Within the scope of the technical concept of the present disclosure, various simple modifications can be made to the technical solution of the present disclosure, all of which fall within the scope of protection of the present disclosure.

Furthermore, it should be noted that the specific technical features described in the above embodiments can be combined in any suitable way without contradiction. To avoid unnecessary repetition, this disclosure will not separately explain various possible combinations.

In addition, various different embodiments disclosed in this disclosure can also be combined arbitrarily, as long as they do not violate the ideas disclosed in this disclosure, they should also be considered as the content disclosed in this disclosure.

## Claims

1. A direct cooling plate (10), the direct cooling plate (10) comprising a plurality of heat exchange channels (100), which being arranged inside the direct cooling plate, each heat exchange channel (100) comprising an inlet (101) for a refrigerant to enter therein and an outlet (102) for the refrigerant to flow out therefrom, wherein the at least one heat exchange channel (100) being circumferentially arranged around the other heat exchange channels (100);
each heat exchange channel (100) forming a heat exchange unit at the direct cooling plate (10), and the heat exchange unit being configured to perform heat exchange in different temperature regions of a battery.

2. The direct cooling plate (10) according to claim 1, wherein the inlet (101) and outlet (102) of the heat exchange channel (100) are located on the same side of the direct cooling plate (10).

3. The direct cooling plate (10) according to claim 1 or 2, wherein the number of heat exchange channels (100) is two, which are channel one (110) and channel two (120), and channel one (110) is arranged around the outer side of channel two (120).

4. The direct cooling plate (10) according to claim 3, wherein channel two (120) is generally concave in shape, and channel one (110) comprises two first cooling portions (1121) and a second cooling portion (1122) connected between the two first cooling portions (1121), wherein the second cooling portion (1122) extends into the concave portion (124) formed by channel two (120), and the two first cooling portions (1121) are circumferentially arranged around the outer side of channel two (120).

5. The direct cooling plate (10) according to claim 3 or 4, wherein channel one (110) comprises a first diversion channel (111), a first cooling channel (112), and a first confluence channel (113) are in communication with each other in sequence, and each of the first diversion channel (111), the first cooling channel (112), and the first confluence channel (113) comprises at least two sub channels, and the number of sub channels of the first cooling channel (112) is greater than the number of sub channels of the first diversion channel (111) and the first confluence channel (113);
and/or, the second flow channel (120) comprises a second diversion channel (121), a second cooling channel (122), and a second confluence channel (123) are in communication with each other in sequence, and each of the second diversion channel (121), the second cooling channel (122), and the second confluence channel (123) comprises at least two sub channels. The number of sub channels in the second cooling channel (122) is greater than the number of sub channels in the second diversion channel (121) and the second confluence channel (123).

6. The direct cooling plate (10) according to claim 5, wherein the number of sub channels of the first diversion channel (111) and the first confluence channel (113) is the same;
the number of sub channels of the second diversion channel (121) and the second confluence channel (123) is the same.

7. The direct cooling plate (10) according to any one of claims 3 to 6, wherein the direct cooling plate (10) comprises interconnected plate one (11) and plate two (12), wherein plate one (11) is provided with groove one (11a) and groove two (11b) that are recessed in a direction away from plate two (12), and groove one (11a) is arranged around the outer side of groove two (11b), and plate two (12) and groove one (11a) enclose channel one (110), while plate two (12) and groove two (11b) enclose channel two (120).

8. The direct cooling plate (10) according to claim 7, wherein groove one (11a) and groove two (11b) are formed by stamping;
and/or, plate one (11) and plate two (12) are connected by brazing.

9. A heat exchanger (1), the heat exchanger (1) comprising a direct cooling plate (10) according to any one of claims 1-8.

10. A power battery pack (1000) comprising a power battery (300), the power battery pack (1000) further comprising a heat exchanger (1) according to claim 9, the heat exchanger (1) being attached to the power battery (300) for cooling and/or heating the power battery (300).

11. A vehicle (2000), the vehicle (2000) comprising a power battery pack (1000) according to claim 10.
